# EUROPEAN PATENT APPLICATION

(11) **EP 4 344 896 A1**
(43) Date of publication of application: **03.04.2024**
(21) Application number: 22201753.5
(22) Date of filing: 14.10.2022
(51) Int. Cl.: B42D 25/328, B42D 25/36, B42D 25/373, G07D 7/00, G02B 5/18

(54) **AN EMBOSSED FILM ASSEMBLY HAVING PASTEL HOLOGRAPHIC SECURITY FEATURES, A SECURITY LAYER ASSEMBLY AND A METHOD**

(30) Priority: 28.09.2022 US 202217954488
(71) Applicant: Illinois Tool Works Inc., Glenview, IL 60025 (US)
(72) Inventor: DESCHNER, Matthew John, 60025 Glenview (US)
(74) Representative: HGF

(57) **Abstract**

An embossed film assembly is provided that includes a substrate and at least one security layer formed from a polymer layer having an image formed therein and a high refractive index (HRI) layer on the polymer layer. The polymer layer and the HRI layer form a holographic security feature on the substrate. The image in the polymer layer is formed from low frequency gratings configured to generate a pastel color in the holographic security feature.

## Description

### CROSS-REFERENCE TO RELATED APPLICATIONS

This application claims priority to and is a continuation-in-part of U.S. Patent Application No. 17/228,336 (filed 12-April-2021), which claims priority to U.S. Provisional Application No. 63/011,693 (filed 17-April-2020). The entire disclosures of these application are incorporated herein by reference.

### BACKGROUND

### Technical Field.

The subject matter described herein relates to embossed film assemblies having holographic security features.

### Discussion of Art.

Security documents can have security features used to ensure the veracity of the documents. Level 1 security features are features that do not require additional equipment to verify the veracity of the documents. These types of security features may be required for many security documents as the security features enable the authenticity of the document to be quickly and easily checked in a location where access to equipment required for level 2 or 3 security features may not be available.

One known level 1 security feature is an optically variable device, such as a feature that changes visual appearance upon movement of the document. Examples of such security devices include holographic features and optically variable color shift pigments.

Holograms are another optically variable level 1 security feature used in some security card and document industries. The holograms can be added to security documents during manufacture of the document substrate or after personalization of the document by using a holographic protective layer. Holograms also can be added into paper documents during manufacture of the documents, into the bodies of plastic cards and documents via introduction of an entire holographic layer, through hot stamping of holographic material onto a plastic layer (that is later laminated into the document body). Holograms can be added at the end of security document production by application of a holographic hot stamp on the surface, application of a holographic overlay, or by a patch laminate following personalization of the document.

Holographic security features for security documents can be made with an image that is embossed or cast into a polymer coating to create a hologram. The embossing process involves using a heated metal shim to press the image into a pre-coated polymer film. The casting process involves forming the image in the polymer layer by curing a liquid monomer and/or monomer/oligomer/polymer formulation while in contact with a shim having the holographic image. Both processes provide a polymer film containing an image as previously prepared in the metal or polymer shim. A high refractive index (HRI) coating is also placed on this polymer film. This HRI coating can be applied before or after the formation of the image within the polymer layer.

Due to the prevalence of holography within the security industry, it is an area that has been targeted to produce fraudulent identification documents. Some holographic techniques, such as dot matrix origination, are known to the high-end counterfeiter and high-quality fake documents with holographic features can be created. As such, it is necessary to introduce new holographic features into standard holographic documents that are not available to the fraudster. These new features still need to be easily identifiable and verifiable by the document inspector such that the features can act as a robust counterfeiting deterrent and a user-friendly verification feature. The design and features possible with conventional holographic origination are often determined by the equipment and software in use. If the high-end fraudster has access to the same or similar equipment, the security feature may be replicated, thus reducing the overall effectiveness of the feature in the secure document.

### BRIEF DESCRIPTION

In one embodiment, an embossed film assembly is provided that includes a substrate and at least one security layer formed from a polymer layer having an image formed therein and an HRI layer on the polymer layer. The polymer layer and the HRI layer form a holographic security feature on the substrate. The image in the polymer layer is formed from low frequency gratings configured to generate a pastel color in the holographic security feature.

In one embodiment, a security layer assembly configured to be disposed on a substrate is provided. The security layer includes a polymer layer having an image formed therein and an HRI layer on the polymer layer. The polymer layer and the HRI layer form a holographic security feature on the substrate. The image in the polymer layer is formed from low frequency gratings configured to generate a pastel color in the holographic security feature.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

The inventive subject matter may be understood from reading the following description of non-limiting embodiments, with reference to the attached drawings, wherein below:
Figure 1 illustrates a cross-sectional view of one example of an embossed film assembly;
Figure 2 illustrates a magnified top view of part the embossed film assembly shown in Figure 1;
Figure 3 illustrates a top view of the embossed film assembly shown in Figure 1 that is not magnified;
Figure 4 illustrates one example of alphanumeric gratings;
Figure 5 illustrates one example of a security feature that is switched off based on a viewing angle of the security feature;
Figure 6 illustrates the security feature in Figure 5 that is switched on based on the viewing angle of the security feature;
Figure 7 illustrates a flowchart of one example of a method for producing an embossed film assembly having a holographic security feature;
Figure 8 illustrates a cross-sectional view of operation of the low frequency diffraction gratings described herein;
Figure 9 illustrates the incident light, gratings, and reflected/refracted light beams shown in Figure 8; and
Figure 10 illustrates a cross-sectional view of another example of the embossed film assembly shown in Figure 1.

### DETAILED DESCRIPTION

One or more embodiments of the inventive subject matter described herein provide security features that are visually different from known holographic features, yet still easy and quick to verify the authenticity of the documents or other objects to which the features are attached. In holographic features today, diffractive color is determined in the graphic design stage. Areas are filled in with a color using dots or bricks containing gratings. An origination machine creates gratings that range from 0.4 microns to 0.7 microns. This is the range that is expected to design grating sizes, as the range of the electromagnetic spectrum that is visible to the human eye ranges from about 380 nanometers (nm) to 740 nm (e.g., 0.38 microns to 0.74 microns). As holographic features are designed to provide color visible to the human eye, it is a natural assumption that gratings should be designed within these sizes limitations.

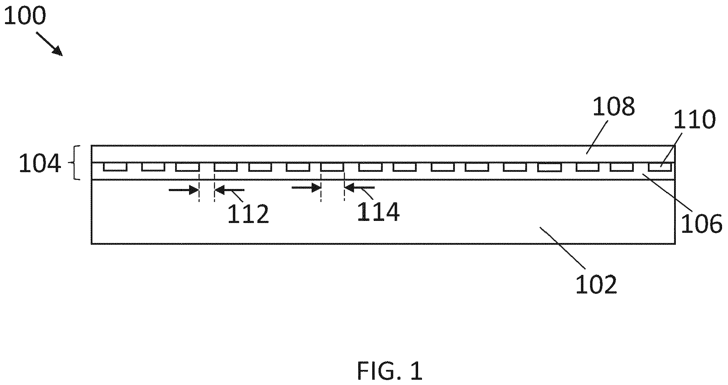

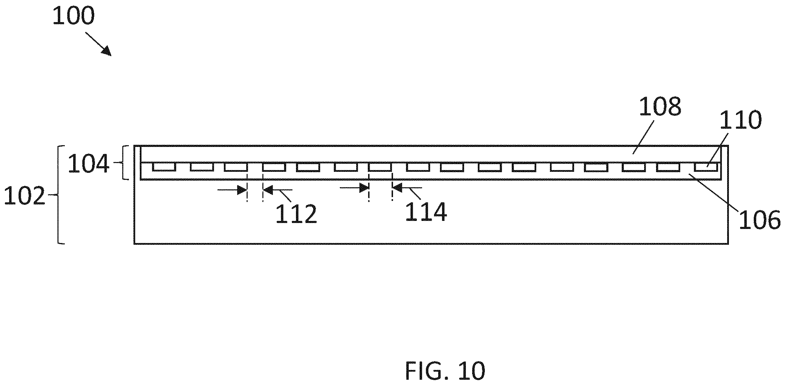

Figure 1 illustrates a cross-sectional view of one example of an embossed film assembly 100. The film assembly 100 can include one or more embodiments of the inventive holographic feature described herein. The film assembly 100 includes a substrate 102 on which at least one security layer assembly 104 is formed. Alternatively, the security layer assembly 104 may be formed in the substrate 102, as shown in Figure 10. For example, instead of the security layer assembly 104 being deposited on top of the substrate 102 (with one or more covers or cover layers deposited on the security layer assembly 104), the substrate 102 may be etched or otherwise formed with one or more recesses in which the security layer assembly 104 may be formed. The security layer assembly 104 is formed from a polymer layer or film 106 and an HRI layer 108 on the polymer layer 106. The combination of the polymer layer 106 and the HRI layer 108 form the holographic feature having pastel colors, as described herein. The HRI layer 108 can be formed of an inorganic material, a metal such as aluminum, a transparent material such as zinc sulfide, or the like.

The polymer layer 106 has an image formed in the polymer layer 106 by a series of low frequency metal gratings 110. These low frequency gratings 110 can be metallic lines or linear bodies that are embossed into the polymer layer 106 and that are laterally spaced apart or separated from each other by relatively large distances 112 in the holographic art, such as at least 0.6 microns to four microns in one embodiment. In another embodiment, the gratings 110 are separated from each other by distances 112 of longer than 0.7 microns to no longer than four microns. Optionally, the gratings 110 can be separated by larger distances such that the gratings 110 are arranged with fewer than fifty lines per millimeter. As described below, this range of distances unexpectedly provides for unique and inventive security features to be provided.

The substrate 102 can be part of an underlying document having the security feature formed by the security layer assembly 104. For example, the substrate 102 can be an identification card, a paper document, a bank card, or the like. With respect to cards, the substrate 102 may have largest outside dimensions of sixty millimeters by ninety-two millimeters, or may have other sizes. The substrate 102 can have personalized or individualized information printed on the same surface of the substrate 102 that the security layer assembly 104 is disposed on. For example, information such as names, addresses, account information, or the like, can be printed on the substrate 102 with the security layer assembly 104 formed on the same surface of the substrate 102 where the personalized information is printed.

Optionally, the substrate 102 can be formed from a polycarbonate material. In one embodiment, the security layer assembly 104 can be formed into the substrate 102 rather than on top of the substrate 102. For example, in Figure 1, the security layer assembly 104 is formed on top of the substrate 102. Alternatively, the polymer layer 106 may be excluded from the embossed film assembly 100 such that the gratings 110 are embossed directly into the substrate 102. For example, the security layer assembly 104 can be formed into the substrate 102 with the substrate 102 being the polymer layer 106 and the gratings 110 embossed into the substrate 102.

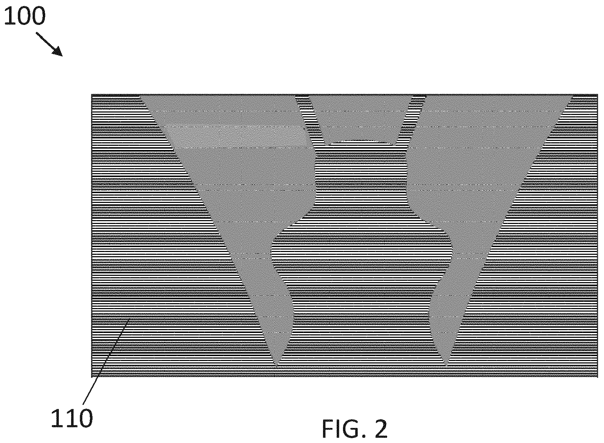

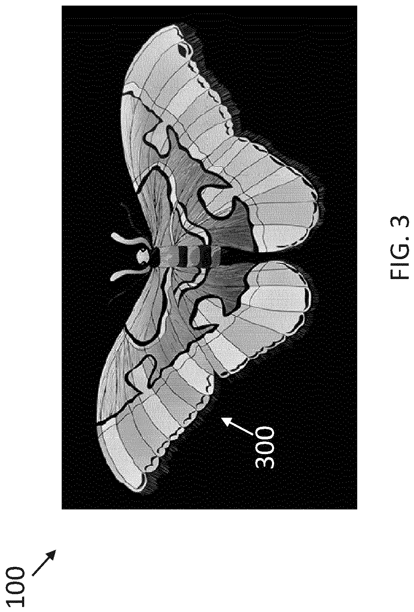

Figure 2 illustrates a magnified top view of part the embossed film assembly 100 shown in Figure 1. Figure 3 illustrates a top view of the embossed film assembly 100 shown in Figure 1 that is not magnified. The low frequency gratings 110 are visible in Figure 2 as forming part of an image 300 of a butterfly in the illustrated example. The gratings 110 can be lines that are provided in the shape of the image 300. The image 300 may be a laser formed image. For example, energy from one or more laser beams may cut the gratings 110 from a larger metal layer or film prior to or after embossing the metal layer or film into the polymer layer 106 or the substrate 102.

These low frequency gratings 110 produce a unique hue of pastel colors to form the image 300, as shown in Figure 3. These pastel colors are provided without use of inks, dyes, or pigments. For example, no part of the security layer assembly 104 may include any inks, dyes, or pigments that form or help form a pastel color of the image 300. The hue of the image 300 produced by the gratings 110 is distinctly different to the standard red, green, and blue (RGB) images that are obtained using solid blocks or areas of colored inks, dyes, or pigments. It is unexpected for such large line spacings of the gratings 110 to produce pastel colored images 300, as these wide line spacings 112 would be expected to produce a colorless feature. The pastel colors formed by the gratings 110 may have a high lightness value and a low to medium saturation in the hue, saturation, and lightness (HSL) color space.

The color of the holographic feature formed by the image 300 can be controlled to provide a variety of desired color palettes. The pastel color palette can be difficult to reproduce on commercially available equipment. Therefore, the pastel holographic features in the image 300 can be more secure features compared to the holographic features obtainable from currently commercially available equipment.

One or more characteristics of the gratings 110 can be modified or controlled to provide additional security features. For example, widths 114 of one or more of the gratings 110 can be different from the widths 114 of one or more other gratings 110. The varying widths 114 can be provided in a pattern or other arrangement to authenticate the document or card on which the gratings 110 are provided. For example, a document or card not having the pattern of varying widths 114 of the gratings 110 (but otherwise having the gratings 110 providing the image 300 with pastel colors) may be identified as counterfeit or a fraudulent copy.

As another example, the spacing distance 112 between the gratings 110 can be varied in a pattern or other arrangement to authenticate the document or card on which the gratings 110 are provided. For example, the distance 112 between different pairs of gratings 110 may not be the same (but falling within the range of distances that provide the pastel colors), but may vary in the image 300 in a predefined pattern. A document or card not having the pattern of varying distances 112 between the gratings 110 (but otherwise having the gratings 110 providing the image 300 with pastel colors) may be identified as counterfeit or a fraudulent copy.

As another example, the paths over which the gratings 110 extend can be varied to authenticate the document or card on which the gratings 110 are provided. For example, instead of each grating 110 being a line or following a linear path, one or more of the gratings 110 may have a non-linear shape, a manually created shape, or the like. A document or card having only linear gratings 110 (or not having the non-linear or manually drawn gratings 110 in one or more designated or pre-selected locations) may be identified as counterfeit or a fraudulent copy.

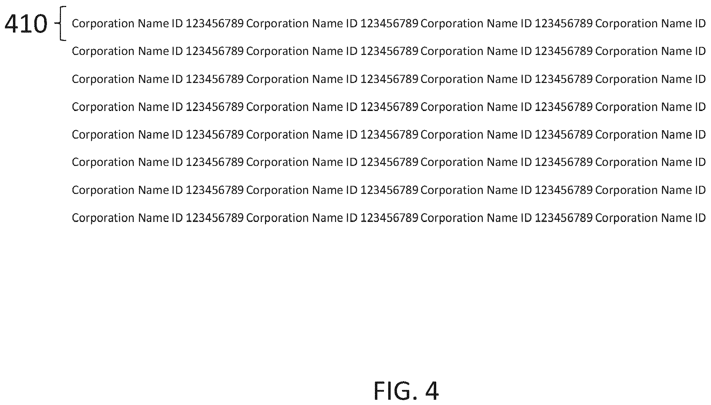

As another example, the gratings 110 may be formed from one or more letters, one or more numbers, or a combination of alphanumeric symbols. Figure 4 illustrates one example of alphanumeric gratings 410. The gratings 410 can represent some of the gratings 110 used in the security layer assembly 104 shown in Figure 1. Instead of each grating 110 merely being an embossed metal line, one or more of the gratings 110 can be alphanumeric gratings 410 formed of letters, numbers, or a combination of letters and numbers. The letters and/or numbers may not be visible to the human eye without magnification, but may be examined using magnification to authenticate the document or card having the gratings 410. Documents or cards not having the alphanumeric gratings 410 may be identified as counterfeit or fraudulent.

The use of the gratings 410 (alone or in combination with line gratings 110) can provide level 2 or level 3 security features to the document or card. Level 2 and 3 security features can require extra equipment and/or skill to view and/or determine legitimacy of the document or card. For example, if micro or nano sized alphanumeric characters are used in the gratings 410, then the security feature or image 300 could display the pastel color to the naked and untrained eye but would also display the "hidden" text when viewed under an appropriate microscope. Thus, extra layers of security could be incorporated into the security feature in one process without adding extra cost or complexity to the production of the security feature.

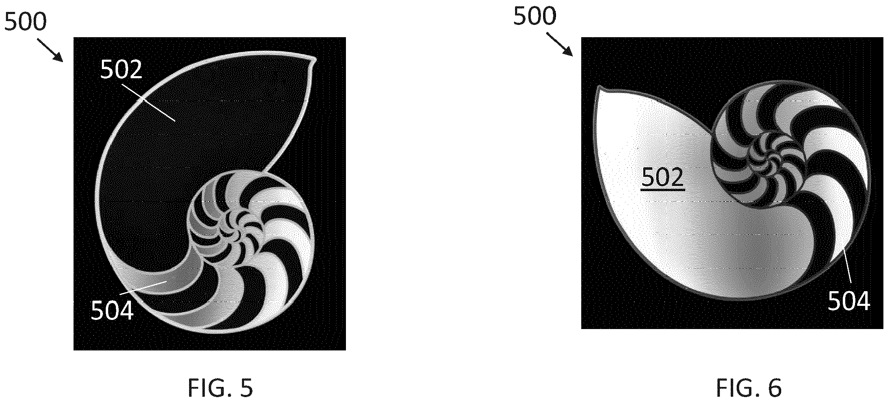

The low frequency gratings 110 can provide holographic features that switch on and off. For example, the color or visibility of one or more portions of an image formed by the low frequency gratings 110 can be visible (e.g., switched on) when viewed from one angle but not be visible (e.g., switched off) when viewed from another angle. Figures 5 and 6 illustrate one example of a security feature 500 that is switched off (Figure 5) and switched on (Figure 6) based on a viewing angle of the security feature 500. The security feature 500 is an image formed by the gratings 110, but that includes switched areas 502, 504 that change appearance based on the angle at which the security feature 500 is viewed.

For example, when viewed at an angle within a defined range of viewing angles, the area 502 is not visible in any color. Instead, the area 502 appears black or as an absence of color when viewed at the angle shown in Figure 5. But, when the document having the security feature 500 is rotated to a viewing angle that is within the defined range of viewing angles (as shown in Figure 6), the area 502 is visible with color in the area 502. Alternatively, instead of or in addition to the viewing angle being an angle that the security feature 500 is rotated, the viewing angle may include the angle between the line of sight of a viewer of the security feature 500 and the plane in which the security feature 500 is positioned. The viewer may see the area 502 when viewing at some angles but not at other angles.

As another example, when viewed at an angle within a defined range of viewing angles, the areas 504 are visible in one color or set of colors (e.g., orange tints in Figure 5). But, when the document having the security feature 500 is rotated to a viewing angle that is within the defined range of viewing angles (as shown in Figure 6), the color of the areas 504 changes. For example, the color of the areas 504 is a non-pastel color (e.g., orange and tints or orange) when viewed at the angle of Figure 5 while the color of the areas 504 changes to pastel color (e.g., yellow and tints of yellow) when viewed at the angle of Figure 6.

The defined range of rotation angles may be around ninety degrees. That is, when the security feature 500 is viewed at a rotation angle of between eighty and one hundred degrees (shown in Figure 6), the area 502 is visible and the areas 504 have a pastel color. But, when the security feature 500 is viewed at a rotation angle outside of this range (e.g., zero rotation degrees, as shown in Figure 5), the area 502 is not visible and the areas 504 have colors other than pastel colors. The defined range of viewing angles may be around forty-five degrees. That is, when the security feature 500 is viewed at a viewing angle of between forty and fifty degrees (shown in Figure 6), the area 502 is visible and the areas 504 have a pastel color. But, when the security feature 500 is viewed at a viewing angle outside of this range (e.g., ninety degrees, or directly overhead as shown in Figure 5), the area 502 is not visible and the areas 504 have colors other than pastel colors.

The security feature 500 can alternate between the visible pastel colors and the other colors due to the crisp and sharp groove structures of the line gratings 110. The pastel color features in the image can be incorporated in a design with a clear on/off switch depending on the viewing and/or rotation angle. This is another feature that provides for a quick and easily verifiable security feature. Two or more distinct images can occupy the same area of a hologram, shifting from one to the other when viewed at different angles. This highly-valued feature enables the viewer to authenticate the image by observing the switching images in a defined area.

The gratings that form the pastel colors in an image or other security feature can be combined with a design having holographic RGB color features. This combination of features can increase the difficulty in counterfeiting a document having the different styles and origination processes of holographic imagery, and also can provide an overall visually pleasing, easily verifiable, and difficult to replicate security document.

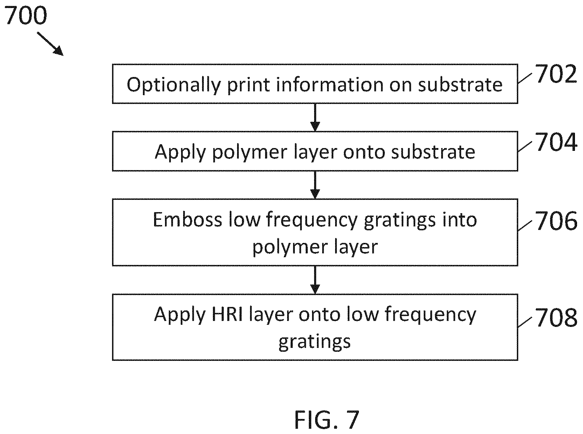

Figure 7 illustrates a flowchart of one example of a method 700 for producing an embossed film assembly having a holographic security feature. The method 700 can be used to provide the security features having low frequency gratings as described herein. At 702, information is optionally printed on a substrate. For example, personalized information can be printed on a surface of a document, card, or the like. At 704, a polymer layer is applied to the surface of the substrate. This polymer layer can be deposited onto the substrate. At 706, low frequency gratings are embossed into the polymer layer to form a holographic image as a security feature. As described herein, the gratings may be spaced apart from each other such that the security feature provides holographic pastel colors. At 708, an HRI layer is applied onto the gratings and the polymer layer. For example, the HRI may be vacuum deposited onto the gratings and polymer layer to form the holographic security image. Optionally, the gratings can be embossed into the polymer layer and the HRI can be applied before coupling the security feature to the substrate.

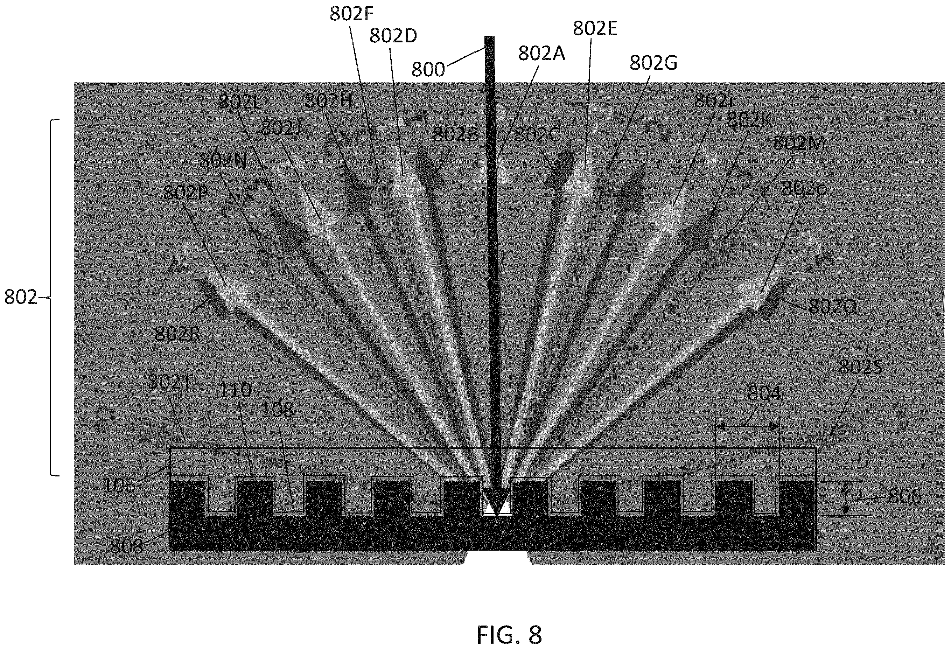

Figure 8 illustrates a cross-sectional view of operation of the low frequency diffraction gratings described herein. Note that Figure 8 is not drawn to scale, and the height, lateral spacing, aspect ratios, and thicknesses of the gratings 110, HRI layer 108, and polymer layer 106 may differ (e.g., be much larger in Figure 8) relative to incident and diffracted beams of light 800, 802 than would be used in the film assembly 100 to aid with the explanation of operation of the gratings 110. For example, the gratings 110 may have a pitch 804 (e.g., a lateral spacing between similar or identical points on neighboring gratings 110) of two microns and may have a height 806 of one micron. Alternatively, the gratings 110 may have other dimensions.

The gratings 110 are shown as box-shaped bodies extending or protruding upward from a base layer 808 of the metal or other material forming the gratings 110. The gratings and the base layer may be parts of a single body or microstructure. For example, the base layer and gratings may be formed from the same material. Alternatively, the bodies may have another shape, such as triangles, trapezoids, wedges, or the like, from what is shown in Figure 8. The microstructure formed by the base layer and the gratings may be formed as an embossable or UV curable coating on another body. The base layer 808 may extend along a surface of the substrate 102 described above with the bodies extending upward and away from the substrate 102. Although not shown in Figure 8, the polymer layer 106 may envelope the gratings 110 and base layer 808 such that the polymer layer 106 covers, encloses, encompasses, etc. the gratings 110 and base layer 808 within the polymer layer 106.

As described herein, the bodies forming the gratings 110 may have the HRI layer 108 on the bodies, with the polymer layer 106 over the HRI layer 108 and the gratings 110. Incident light 800 may include several different wavelengths of light. The HRI layer 108 may be vacuum metalized to the microstructure of the gratings. The HRI layer may be very thin, such as only a few or several molecules thick (e.g., less than ten, twenty, fifty, or a hundred molecules thick). The HRI layer may be deposited so as to follow the contours of the microstructure.

The incident beam of light 800 shown in Figure 8 may be a white light having many different wavelengths and colors of light. While only one beam of incident light 800 is shown in Figure 8 as being incident between two of the gratings 110, many beams of incident light 800 may be directed onto the gratings 110, directed between the gratings 110, directed at angles other than a normal angle (as shown in Figure 8), etc. Additionally, while the incident light 800 is shown as white light, alternatively, the incident light 800 may have fewer colors or a single color (e.g., a laser beam of one color).

Part of the incident light 800 may be reflected off the HRI layer 108. The reflection of this portion of the incident light 800 is not shown in Figure 8. Other parts of the light 800 may pass through the polymer layer 106 and may slightly bend as the light passes into and/or out of the polymer layer 106. This light may reach the gratings 110 of the microstructure. The gratings 110 may operate as prisms that diffract and reflect the different portions (e.g., wavelengths) of the incident light 800 in different directions. For example, while the incident light may arrive at the gratings 110 at an angle, the light 800 may be reflected and/or refracted by the gratings 110 at different angles as reflected and/or refracted light 802. The different angles at which this light 802 is reflected and/or refracted can create the pastel hues to a viewer, which can create the pastel holographic images described herein. The height of the gratings 110 may be changed to vary the appearance of the pastel holographic images. For example, increasing the height of the gratings 110 may brighten the pastel colors while reducing the height of the gratings 110 may create a more blended or saturated appearance of the pastel colors.

In the illustrated example, the incident beam of light 800 is reflected and refracted by the different layers 106, 108 and gratings 110 such that different orders of different wavelengths of light are reflected and refracted in different directions. For example, a green zero diffraction order wavelength of refracted/reflected light 802A represents green light that is directly reflected back toward the origin or source of the incident beam of light 800 in an opposite direction than the incident beam of light 800, a blue positive first diffraction order wavelength of light 802B is reflected at an acute angle on a first side of the incident light 800, a blue negative first diffraction order wavelength of light 802C is reflected at the same acute angle as the light 802B but on a different second side of the incident light 800, a green positive first diffraction order wavelength of light 802D is reflected at a larger acute angle on the first side of the incident light 800, a green negative first diffraction order wavelength of light 802E is reflected at the same acute angle as the light 802D but on the second side of the incident light 800, a red positive first diffraction order wavelength of light 802F is reflected at a larger acute angle on the first side of the incident light 800, a red negative first diffraction order wavelength of light 802G is reflected at the same acute angle as the light 802F but on the second side of the incident light 800, a blue positive second diffraction order wavelength of light 802H is reflected at a larger acute angle on the first side of the incident light 800, a blue negative second diffraction order wavelength of light 802I is reflected at the same acute angle as the light 802H but on the second side of the incident light 800, a green positive second diffraction order wavelength of light 802J is reflected at a larger acute angle on the first side of the incident light 800, a green negative second diffraction order wavelength of light 802K is reflected at the same acute angle as the light 802J but on the second side of the incident light 800, a blue positive third diffraction order wavelength of light 802L is reflected at a larger acute angle on the first side of the incident light 800, a blue negative third diffraction order wavelength of light 802M is reflected at the same acute angle as the light 802L but on the second side of the incident light 800, a red positive second diffraction order wavelength of light 802N is reflected at a larger acute angle on the first side of the incident light 800, a red negative second diffraction order wavelength of light 802O is reflected at the same acute angle as the light 802N but on the second side of the incident light 800, a green positive third diffraction order wavelength of light 802P is reflected at a larger acute angle on the first side of the incident light 800, a green negative third diffraction order wavelength of light 802Q is reflected at the same acute angle as the light 802P but on the second side of the incident light 800, a blue positive fourth diffraction order wavelength of light 802R is reflected at a larger acute angle on the first side of the incident light 800, a blue negative fourth diffraction order wavelength of light 802S is reflected at the same acute angle as the light 802R but on the second side of the incident light 800, a red positive third diffraction order wavelength of light 802T may be reflected at a larger acute angle on the first side of the incident light 800, and/or a red negative third diffraction order wavelength of light 802U may be reflected at the same acute angle as the light 802T but on the second side of the incident light 800. The blue, red, and other light also may have zero diffraction orders (not shown). The fourth diffraction order of the red and green wavelengths of light may not be directed back to the viewer as the angles at which these diffraction orders return from the gratings 110 may be too flat or close to parallel to the surface of the substrate 102 to be visible to the viewer.

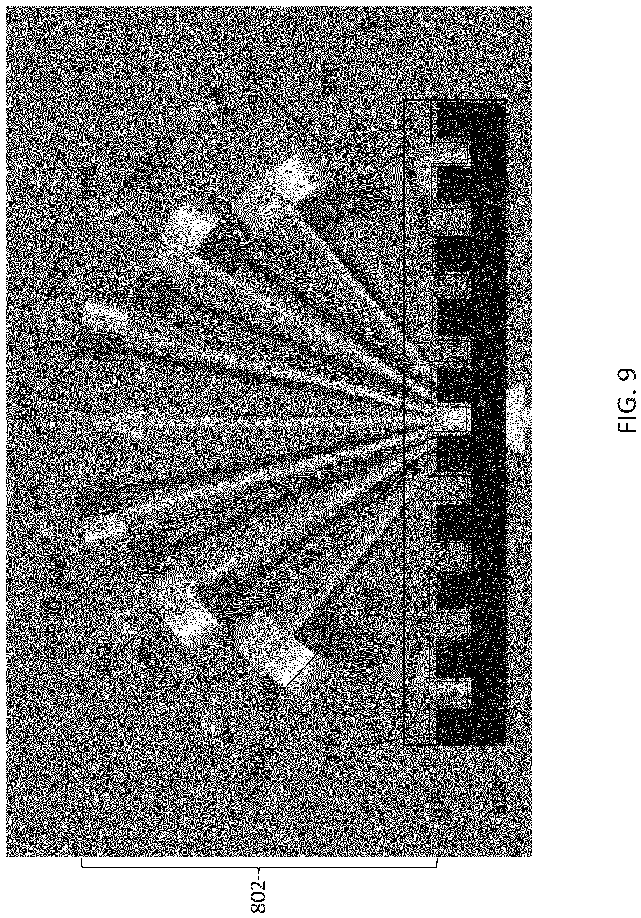

While Figure 8 shows individual beams of light, the light that is reflected back to the viewer may spatially extend over larger lateral distances as different spectra of light. Figure 9 illustrates the same incident light 800, gratings 110, and reflected/refracted light beams 802 as Figure 8, but with more of the reflected/refracted light shown as different spectra 900 of light. As shown in Figures 8 and 9, the gratings 110 diffract the incident light 800 to create the different colored beams and spectra of light that are reflected back toward the viewer at different angles due to the different diffraction orders. For example, the separate, individual diffraction orders shown in Figure 8 are some, but not all, of the different wavelengths of light that are visible to a viewer. The spectra 900 shown in Figure 9 illustrate more of the different wavelengths of light that are visible to the viewer. This can create the pastel appearances described herein. The inventors of the subject matter described herein have discovered that preparing an assembly as shown in Figures 1 and 10 with the gratings spaced apart as described herein provides for the refraction, diffraction, and/or reflection of different wavelengths of light to create the pastel colors also described herein.

In one embodiment, an embossed film assembly is provided that includes a substrate and at least one security layer formed from a polymer layer having an image formed therein and an HRI layer on the polymer layer. The polymer layer and the HRI layer form a holographic security feature on the substrate. The image in the polymer layer is formed from low frequency gratings configured to generate a pastel color in the holographic security feature.

Optionally, the low frequency gratings generate the pastel color without any pastel-colored inks or dyes in or on the substrate.

Optionally, the low frequency gratings include a series of lines laterally spaced apart from each other by a distance of at least 0.6 microns to four microns.

Optionally, the low frequency gratings include a series of lines laterally spaced apart from each other by a distance that is longer than 0.7 microns and no longer than four microns.

Optionally, the low frequency gratings generate the pastel color having a high lightness value and a low to medium saturation in an HSL cylinder space.

Optionally, the low frequency gratings include one or more letters, one or more numbers, or a combination of alphanumeric symbols.

Optionally, the one or more letters, the one or more numbers, or the combination of alphanumeric symbols are microscopically visible.

Optionally, the low frequency gratings are configured to generate the pastel color in the holographic security feature while the image is viewed at angle within a defined range of viewing angles and the holographic security feature is not visible while viewed at another angle that is outside of the defined range of viewing angles.

Optionally, the low frequency gratings are configured to generate the pastel color in the holographic security feature while the image is viewed at rotation angle within a defined range of rotation angles of the substrate and the holographic security feature is not visible while viewed at another rotation angle that is outside of the defined range of rotation angles of the substrate.

Optionally, the holographic security feature has the pastel color while the image is viewed at angle within a defined range of viewing angles and the holographic security feature has another, non-pastel color while viewed at another angle that is outside of the defined range of viewing angles.

Optionally, the holographic security feature has the pastel color while the image is viewed at rotation angle within a defined range of rotation angles of the substrate and the holographic security feature has another, non-pastel color while viewed at another rotation angle that is outside of the defined range of rotation angles of the substrate.

Optionally, the substrate is a card or document.

Optionally, the substrate includes personalized information printed on the substrate beneath the at least one security layer.

Optionally, the at least one security layer is disposed inside the substrate.

Optionally, the substrate includes a polycarbonate material.

Optionally, the image is a laser-generated image.

In one embodiment, a security layer assembly configured to be disposed on a substrate is provided. The security layer includes a polymer layer having an image formed therein and an HRI layer on the polymer layer. The polymer layer and the HRI layer form a holographic security feature on the substrate. The image in the polymer layer is formed from low frequency gratings configured to generate a pastel color in the holographic security feature.

Optionally, the low frequency gratings generate the pastel color without any pastel-colored inks or dyes in or on the polymer layer.

Optionally, the low frequency gratings include a series of lines laterally spaced apart from each other by a distance of at least 0.6 microns to four microns.

Optionally, the low frequency gratings include a series of lines laterally spaced apart from each other by a distance that is longer than 0.7 microns and no longer than four microns.

Optionally, the low frequency gratings generate the pastel color having a high lightness value and a low to medium saturation in an HSL cylinder space.

Optionally, the low frequency gratings include one or more letters, one or more numbers, or a combination of alphanumeric symbols.

Optionally, the one or more letters, the one or more numbers, or the combination of alphanumeric symbols are microscopically visible.

Optionally, the low frequency gratings are configured to generate the pastel color in the holographic security feature while the image is viewed at angle within a defined range of viewing angles and the holographic security feature is not visible while viewed at another angle that is outside of the defined range of viewing angles.

Optionally, the low frequency gratings are configured to generate the pastel color in the holographic security feature while the image is viewed at rotation angle within a defined range of rotation angles and the holographic security feature is not visible while viewed at another rotation angle that is outside of the defined range of rotation angles.

Optionally, the holographic security feature has the pastel color while the image is viewed at angle within a defined range of viewing angles and the holographic security feature has another, non-pastel color while viewed at another angle that is outside of the defined range of viewing angles.

Optionally, the holographic security feature has the pastel color while the image is viewed at rotation angle within a defined range of rotation angles and the holographic security feature has another, non-pastel color while viewed at another rotation angle that is outside of the defined range of rotation angles.

Optionally, the image is a laser-generated image.

Certain embodiments of the invention are described in the following numbered clauses.
Clause 1. An embossed film assembly comprising:
   a substrate; and at least one security layer formed from a polymer layer having an image formed therein and a high refractive index (HRI) layer on the polymer layer, the polymer layer and the HRI layer forming a holographic security feature on the substrate, wherein the image in the polymer layer is formed from low frequency gratings configured to generate a pastel color in the holographic security feature.
Clause 2. The embossed film assembly of clause 1, wherein the low frequency gratings generate the pastel color without any pastel-colored inks or dyes in or on the substrate.
Clause 3. The embossed film assembly of clause 1, wherein the low frequency gratings include a series of lines laterally spaced apart from each other by a distance of at least 0.6 microns to four microns.
Clause 4. The embossed film assembly of clause 1, wherein the low frequency gratings include a series of lines laterally spaced apart from each other by a distance that is longer than 0.7 microns and no longer than four microns.
Clause 5. The embossed film assembly of clause 1, wherein the low frequency gratings generate the pastel color having a high lightness value and a low to medium saturation in an HSL cylinder space.
Clause 6. The embossed film assembly of clause 1, wherein the low frequency gratings include one or more letters, one or more numbers, or a combination of alphanumeric symbols.
Clause 7. The embossed film assembly of clause 6, wherein the one or more letters, the one or more numbers, or the combination of alphanumeric symbols are microscopically visible.
Clause 8. The embossed film assembly of clause 1, wherein the low frequency gratings are configured to generate the pastel color in the holographic security feature while the image is viewed at angle within a defined range of viewing angles and the holographic security feature is not visible while viewed at another angle that is outside of the defined range of viewing angles.
Clause 9. The embossed film assembly of clause 1, wherein the low frequency gratings are configured to generate the pastel color in the holographic security feature while the image is viewed at rotation angle within a defined range of rotation angles of the substrate and the holographic security feature is not visible while viewed at another rotation angle that is outside of the defined range of rotation angles of the substrate.
Clause 10. The embossed film assembly of clause 1, wherein the holographic security feature has the pastel color while the image is viewed at angle within a defined
   range of viewing angles and the holographic security feature has another, non-pastel color while viewed at another angle that is outside of the defined range of viewing angles.
Clause 11. The embossed film assembly of clause 1, wherein the holographic security feature has the pastel color while the image is viewed at rotation angle within a defined range of rotation angles of the substrate and the holographic security feature
   another, non-pastel color while viewed at another rotation angle that is outside of the defined range of rotation angles of the substrate.
Clause 12. The embossed film assembly of clause 1, wherein the at least one security layer is disposed inside the substrate.
Clause 13. The embossed film assembly of clause 12, wherein the substrate includes a polycarbonate material.
Clause 14. A security layer assembly configured to be disposed on a substrate, the security layer comprising:
   a polymer layer having an image formed therein; and
   a high refractive index (HRI) layer on the polymer layer, the polymer layer and the HRI layer forming a holographic security feature on the substrate,
   wherein the image in the polymer layer is formed from low frequency gratings configured to generate a pastel color in the holographic security feature.
Clause 15. The security layer assembly of clause 14, wherein the low frequency gratings generate the pastel color without any pastel-colored inks or dyes in or on the polymer layer.
Clause 16. The security layer assembly of clause 14, wherein the low frequency gratings include a series of lines laterally spaced apart from each other by a distance of at least 0.6 microns to four microns.
Clause 17. The security layer assembly of clause 14, wherein the low frequency gratings include a series of lines laterally spaced apart from each other by a distance that is longer than 0.7 microns and no longer than four microns.
Clause 18. The security layer assembly of clause 14, wherein the low frequency gratings generate the pastel color having a high lightness value and a low to medium saturation in an HSL cylinder space.
Clause 19. The security layer assembly of clause 14, wherein the low frequency gratings include one or more letters, one or more numbers, or a combination of alphanumeric symbols.
Clause 20. A method comprising:
   printing personalized information on a surface of a document substrate;
   applying a polymer layer to the surface of the document substrate;
   forming a holographic pastel-color-containing image by embossing low frequency gratings into the polymer layer; and
   applying a high refractive index layer onto the gratings and the polymer layer.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

This written description uses examples to disclose the embodiments, including the best mode, and to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

## Claims

1. An embossed film assembly comprising:
a substrate; and
at least one security layer formed from a polymer layer having an image formed therein and a high refractive index (HRI) layer on the polymer layer, the polymer layer and the HRI layer forming a holographic security feature on the substrate,
wherein the image in the polymer layer is formed from low frequency gratings configured to generate a pastel color in the holographic security feature.

2. The embossed film assembly of claim 1, wherein the low frequency gratings generate the pastel color without any pastel-colored inks or dyes in or on the substrate.

3. The embossed film assembly of claim 1, wherein the low frequency gratings include a series of lines laterally spaced apart from each other by a distance of at least 0.6 microns to four microns and optionally wherein the low frequency gratings include a series of lines laterally spaced apart from each other by a distance that is longer than 0.7 microns and no longer than four microns.

4. The embossed film assembly of claim 1, wherein the low frequency gratings generate the pastel color having a high lightness value and a low to medium saturation in an HSL cylinder space.

5. The embossed film assembly of claim 1, wherein the low frequency gratings include one or more letters, one or more numbers, or a combination of alphanumeric symbols and optionally wherein the one or more letters, the one or more numbers, or the combination of alphanumeric symbols are microscopically visible.

6. The embossed film assembly of claim 1, wherein the low frequency gratings are configured to generate the pastel color in the holographic security feature while the image is viewed at angle within a defined range of viewing angles and the holographic security feature is not visible while viewed at another angle that is outside of the defined range of viewing angles or wherein the low frequency gratings are configured to generate the pastel color in the holographic security feature while the image is viewed at rotation angle within a defined range of rotation angles of the substrate and the holographic security feature is not visible while viewed at another rotation angle that is outside of the defined range of rotation angles of the substrate.

7. The embossed film assembly of claim 1, wherein the holographic security feature has the pastel color while the image is viewed at angle within a defined range of viewing angles and the holographic security feature has another, non-pastel color while viewed at another angle that is outside of the defined range of viewing angles.

8. The embossed film assembly of claim 1, wherein the holographic security feature has the pastel color while the image is viewed at rotation angle within a defined range of rotation angles of the substrate and the holographic security feature has another non-pastel color while viewed at another rotation angle that is outside of the defined range of rotation angles of the substrate.

9. The embossed film assembly of claim 1, wherein the at least one security layer is disposed inside the substrate and optionally wherein the substrate includes a polycarbonate material.

10. A security layer assembly configured to be disposed on a substrate, the security layer comprising:
a polymer layer having an image formed therein; and a high refractive index (HRI) layer on the polymer layer, the polymer layer and the HRI layer forming a holographic security feature on the substrate,
wherein the image in the polymer layer is formed from low frequency gratings configured to generate a pastel color in the holographic security feature.

11. The security layer assembly of claim 10, wherein the low frequency gratings generate the pastel color without any pastel-colored inks or dyes in or on the polymer layer.

12. The security layer assembly of claim 10, wherein the low frequency gratings include a series of lines laterally spaced apart from each other by a distance of at least 0.6 microns to four microns and optionally wherein the low frequency gratings include a series of lines laterally spaced apart from each other by a distance that is longer than 0.7 microns and no longer than four microns.

13. The security layer assembly of claim 10, wherein the low frequency gratings generate the pastel color having a high lightness value and a low to medium saturation in an HSL cylinder space.

14. The security layer assembly of claim 10, wherein the low frequency gratings include one or more letters, one or more numbers, or a combination of alphanumeric symbols.

15. A method comprising:
printing personalized information on a surface of a document substrate;
applying a polymer layer to the surface of the document substrate;
forming a holographic pastel-color-containing image by embossing low frequency gratings into the polymer layer; and applying a high refractive index layer onto the gratings and the polymer layer.
